# EUROPÄISCHE PATENTSCHRIFT

(11) **EP 2 129 950 B1**
(45) Veröffentlichungstag und Bekanntmachung des Hinweises auf die Patenterteilung: **07.09.2011**
(21) Anmeldenummer: 08735820.6
(22) Anmeldetag: 04.04.2008
(51) Int. Cl.: F16K 37/00, G05B 23/02

(54) **VERFAHREN ZUR ÜBERPRÜFUNG DER FUNKTIONSFÄHIGKEIT EINES STELLGERÄTES**
METHOD FOR CHECKING THE FUNCTIONALITY OF AN ACTUATOR
PROCÉDÉ POUR CONTRÔLER L'APTITUDE AU FONCTIONNEMENT D'UN APPAREIL DE RÉGLAGE

(30) Priorität: 05.04.2007 DE 102007016817
(43) Veröffentlichungstag der Anmeldung: 09.12.2009
(73) Patentinhaber: Siemens Aktiengesellschaft, 80333 München (DE)
(72) Erfinder: BRAUN, Michaela, 90449 Nürnberg (DE); HIRSCH, Volker, 76889 Steinfeld (DE)
(86) Internationale Anmeldenummer: PCT/EP2008/054079
(87) Internationale Veröffentlichungsnummer: WO 2008/122600

(56) Entgegenhaltungen:
- GB-A- 2 372 087
- US-A1- 2002 108 436
- US-A1- 2006 219 299
- US-A1- 2007 018 127

## Beschreibung

Die Erfindung betrifft ein Verfahren zur Überprüfung der Funktionsfähigkeit eines Stellgerätes bei dem ein Stellventil über einen Stellantrieb mittels eines an dem Stellventil angreifenden Stellglieds verstellbar ist, ein Positionsgeber die Ist-Position des Stellglieds erfasst und ein elektro-pneumatischer Stellungsregler in Abhängigkeit von der Ist-Position und einer Soll-Position eine pneumatische Stellgröße erzeugt, die dem Stellantrieb über ein aktiviertes und zur Entlüftung des Stellantriebs deaktivierbares Magnetventil zugeführt wird, wobei zur Durchführung eines Partial-Stroke-Tests das Stellglied kurzzeitig über einen Teil seines Stellweges bewegt und dabei die Stellbewegung erfasst wird und wobei zum Testen des Magnetventils dieses kurzeitig deaktiviert wird, so dass sich das Stellglied nur über einen Teil seines Stellweges bewegt.

Ein solches Verfahren ist aus der US 2006/0219299 A1 bekannt. Bei dem bekannten Verfahren wird beim Testen des Magnetventils die Druckdifferenz zwischen der mit dem Stellungsregler verbundenen Seite und der mit dem Stellantrieb verbundenen Seite des Magnetventils überwacht. Der Test des Magnetventils wird als erfolgreich bewertet, wenn bei dem kurzzeitigen Deaktivieren des Magnetventils der Druck auf der Seite des Stellantriebs signifikant abfällt, während der von dem Stellungsregler gelieferte Druck weitgehend unverändert bleibt.

Der Erfindung liegt die Aufgabe zugrunde, eine zuverlässige Funktionsüberprüfung des Magnetventils zu ermöglichen, ohne dass dazu besondere Drucksensoren und entsprechende Pneumatikverbindungen zu dem Stellungsregler bzw. dem Magnetventil erforderlich sind.

Gemäß der Erfindung wird die Aufgabe dadurch gelöst, dass bei dem Verfahren der eingangs angegebenen Art während des Tests des Magnetventils die dabei ausgeführte Wegänderung des Stellglieds erfasst und abgespeichert wird und dass der Test des Magnetventils in Abhängigkeit davon als erfolgreich bewertet wird, dass sich das Stellglied um einen vorgegebenen Mindestweg bewegt hat. Damit kann auf die bei dem bekannten Verfahren vorgesehenen Drucksensoren verzichtet werden.

Die Tests erfolgen vorzugsweise automatisch durch Programmablauf außerhalb des Stellgerätes in einer leittechnischen Einrichtung, die das Magnetventil deaktiviert bzw. aktiviert sowie mit dem Stellungsregler kommuniziert und von diesem die erfassten Ist-Positionen des Stellglieds erhält. Die leittechnische Einrichtung gibt dabei die Zeiten für die Tests automatisch vor und führt den Vergleich der Soll- und Ist-Positionen durch.

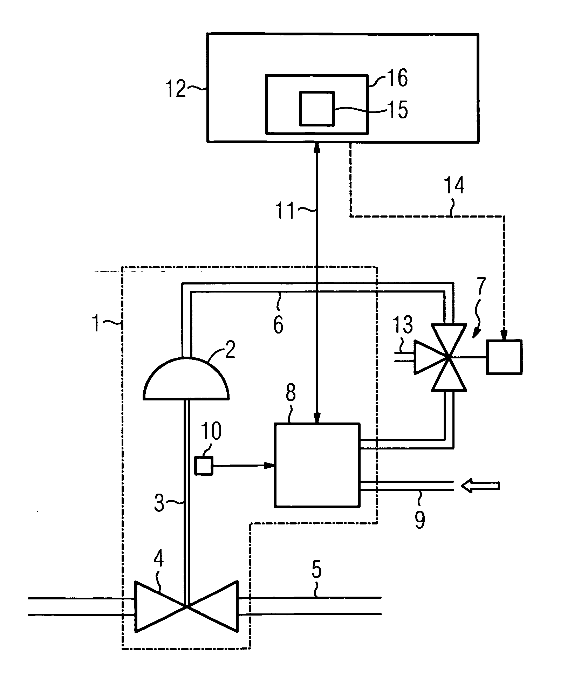

Zur weiteren Erläuterung der Erfindung wird im Folgenden auf die einzige Figur der Zeichnung Bezug genommen, die ein Ausführungsbeispiel eines Stellgerätes zur Durchführung des erfindungsgemäßen Verfahrens zeigt.

Das Stellgerät 1 enthält einen pneumatischen Stellantrieb 2, der über ein Stellglied 3, hier in Form einer Hubstange, ein Ventil 4 betätigt und dabei den Fluidstrom in einer Rohrleitung 5 steuert. Der Stellantrieb 2 ist über eine pneumatische Leitung 6 mit einem darin angeordneten Magnetventil 7 an einem Stellungsregler 8 angeschlossen, der aus einer Versorgungsleitung 9 mit Druckluft versogt wird. Ein Positionsgeber 10 erfasst die Ist-Position des Stellglieds 3 und führt sie dem Stellungsregler 8 zu, der in Abhängigkeit von der Ist-Position und einer vorgebbaren Soll-Position als Stellgröße einen variablen Druck in der Leitung 6 einstellt, um das Stellglied 3 mit dem Ventil 4 in die Soll-Position zu bewegen. Um die Soll-Position von außen vorgeben und die Ist-Position des Stellglieds 3 abfragen zu können, ist der Stellungsregler 8 über eine Kommunikationsleitung 11 mit einer leittechnischen Einrichtung 12 verbunden.

Das Magnetventil 7 ist als Dreiwegeventil ausgebildet und verbindet im aktivierten Zustand den Stellungsregler 8 mit dem Stellantrieb 2. Im deaktivierten Zustand wird der Stellantrieb 2 von dem Stellungsregler 8 getrennt und statt dessen über einen Magnetventilauslass 13 entlüftet, so dass der Stellantrieb 2 drucklos ist und das Stellglied 3 mit dem Ventil 4 beispielsweise unter Einwirkung einer Feder in dem Stellantrieb 2 in eine Sicherheitsposition bewegt werden. Im normalen Betrieb ist das Magnetventil 8 aktiviert und wird nur im Notfall deaktiviert. Die Aktivierung bzw. Deaktivierung des Magnetventils 7 erfolgt unmittelbar durch die leittechnische Entrichtung 12 über eine Steuerleitung 14.

In einem von der leittechnischen Einrichtung 12 automatisch in regelmäßigen Zeitabständen ausgelösten Partial-Stroke-Test wird das Ventil 4 bei aktiviertem Magnetventil 7 kurzzeitig aus der jeweils aktuellen Position über einen Teil seines Stellweges bewegt und anschließend wieder zurück bewegt. Die Stellungsänderung ist dabei so gering, dass der laufende Betrieb der Anlage, in der das Ventil 4 eingebaut ist, nicht oder nur unwesentlich gestört wird. Bei jedem Test wird die erreichte Ist-Position des Stellgliedes 3 bzw. Ventils 4 in der Einrichtung 12 in einem Speicher 15 angespeichert und protokolliert. Der Partial-Stroke-Test wird in Abhängigkeit davon als erfolgreich bewertet, dass eine vorgegebene Stellungsänderung innerhalb einer Mindestzeit erreicht wird oder dass die Stellungsänderung innerhalb einer vorgegebenen Zeit einen Mindestwert erreicht. Auf diese Weise kann festgestellt werden, wenn das Stellventil 4 blockiert oder zu langsam reagiert. In einer Auswerteeinrichtung 16 der Einrichtung 12 können die während aufeinanderfolgender Partial-Stroke-Tests abgespeicherten Wegänderungen miteinander verglichen und auf trendhafte Veränderungen analysiert werden, um beispielsweise den Wartungsbedarf zu ermitteln.

Nach jedem oder jedem n-ten Partial-Stroke-Test wird die Funktionsfähigkeit des Magnetventils 7 getestet, indem das Magnetventil 7 kurzeitig deaktiviert wird. Die Deaktivierung kann durch einen Deaktivierungs-Impuls vorgegebener Zeitdauer oder eine begrenzte Deaktivierungs-Impulsfolge erfolgen. Die Deaktivierungs-Zeitdauer ist so gewählt, dass sich das Stellglied 3 aus der jeweils aktuellen Position nur über einen geringen Teil seines Stellweges bewegt und anschließend wieder zurück bewegt. Auch bei diesem Test wird die erreichte Ist-Position des Stellgliedes 3 bzw. Ventils 4 in der Einrichtung 12 in dem Speicher 15 abgespeichert und protokolliert. Der Test wird dann als erfolgreich bewertet, wenn sich das Stellglied 3 um einen vorgegebenen Mindestweg bewegt hat. In einer Auswerteeinrichtung 16 der Einrichtung 12 werden die während aufeinanderfolgender Tests des Magnetventils 7 abgespeicherten Wegänderungen miteinander verglichen und auf trendhafte Veränderungen analysiert, um beispielsweise den Wartungsbedarf zu ermitteln.

## Patentansprüche

1. Verfahren zur Überprüfung der Funktionsfähigkeit eines Stellgerätes (1) bei dem ein Stellventil (4) über einen Stellantrieb (2) mittels eines an dem Stellventil (2) angreifenden Stellglied (3) verstellbar ist, ein Positionsgeber (10) die Ist-Position des Stellglieds (3) erfasst und ein elektro-pneumatischer Stellungsregler (8) in Abhängigkeit von der Ist-Position und einer Soll-Position eine pneumatische Stellgröße erzeugt, die dem Stellantrieb (2) über ein aktiviertes und zur Entlüftung des Stellantriebs deaktivierbares Magnetventil (7) zugeführt wird,
wobei zur Durchführung eines Partial-Stroke-Tests das Stellglied (3) kurzzeitig über einen Teil seines Stellweges bewegt und dabei die Stellbewegung erfasst wird und
wobei zum Testen des Magnetventils (7) dieses kurzeitig deaktiviert wird, so dass sich das Stellglied (3) nur über einen Teil seines Stellweges bewegt,
**dadurch gekennzeichnet,**
**dass** während des Tests des Magnetventils (7) die dabei ausgeführte Wegänderung des Stellglieds (3) erfasst und abgespeichert wird und dass der Test des Magnetventils (7) in Abhängigkeit davon als erfolgreich bewertet wird, dass sich das Stellglied (3) um einen vorgegebenen Mindestweg bewegt hat.

2. Verfahren nach Anspruch 1, **dadurch gekennzeichnet, dass** die Tests durch Programmablauf außerhalb des Stellgerätes (1) in einer leittechnischen Einrichtung (12) erfolgen, die das Magnetventil (7) deaktiviert bzw. aktiviert sowie mit dem Stellungsregler (8) kommuniziert und von diesem die erfassten Ist-Positionen des Stellglieds (3) erhält.

## Claims

1. Method for checking the functionality of an actuator (1), in which an actuating valve (4) can be adjusted via an actuating drive (2) by means of an actuating element (3) which acts on the actuating valve (2), a position transmitter (10) records the actual position of the actuating element (3), and an electropneumatic position regulator (8) produces a pneumatic manipulated variable as a function of the actual position and a nominal position, which manipulated variable is supplied to the actuating drive (2) via an activated solenoid valve (7), which can be deactivated in order to vent the actuating drive, wherein, in order to carry out a partial stroke test, the actuating element (3) is briefly moved over a part of its actuating travel, and the actuating movement is recorded during this process, and
wherein, in order to test the solenoid valve (7) it is briefly deactivated, as a result of which the actuating element (3) is moved over only a part of its actuating travel,
**characterized**
**in that** during the test of the solenoid valve (7), the position change of the actuating element (3) which takes place during the test is recorded and stored and that the test of the solenoid valve (7) is assessed as successful as a function of the actuating element (3) having moved over a predetermined minimum distance.

2. Method according to Claim 1, **characterized in that** the tests are carried out by a program procedure outside the actuator (1) in a control device (12), which deactivates and activates the solenoid valve (7), communicates with the position regulator (8) and receives the recorded actual positions of the actuating element (3) from this position regulator (8).

## Revendications

1. Procédé de contrôle de l'aptitude à fonctionner d'un appareil ( 1 ) de réglage dans lequel une vanne ( 4 ) de réglage peut être réglée par un actionneur ( 2 ) au moyen d'un organe ( 3 ) de réglage attaquant la vanne ( 2 ) de réglage, un indicateur ( 10 ) de position relève la position réelle de l'organe ( 3 ) de réglage et un régleur ( 8 ) électropneumatique de position produit, en fonction d'une position réelle et d'une position de consigne, une grandeur pneumatique de réglage, qui est envoyée à l'actionneur ( 2 ) par une électrovanne ( 7 ) activée et pouvant être désactivée pour purger l'actionneur,
dans lequel pour effectuer un test partial stroke, on déplace l'organe ( 3 ) de réglage brièvement sur une partie de sa course et on détecte le mouvement de réglage et
dans lequel, pour tester l'électrovanne ( 7 ), on la désactive brièvement de manière à ce que l'organe ( 3 ) de réglage ne se déplace que sur une partie de sa course,
**caractérisé en ce que**, pendant le test de l'électrovanne ( 7 ), on détecte la variation de course effectuée par l'organe ( 3 ) de réglage et on la mémorise et **en ce que** l'on évalue le test de l'électrovanne ( 7 )en fonction de cela comme couronné de succès, si l'organe ( 3 ) de réglage s'est déplacé d'une course minimum prescrite.

2. Procédé suivant la revendication 1, **caractérisé en ce que** l'on effectue le test par déroulement d'un programme à l'extérieur de l'appareil ( 1 ) de réglage dans un dispositif ( 12 ) de technique de conduite, qui désactive ou active l'électrovanne ( 7 ), qui communique avec le régleur ( 8 ) de position et qui en reçoit les positions réelles détectées de l'organe ( 3 ) de réglage.
